# EUROPEAN PATENT SPECIFICATION

(11) **EP 3 675 462 B1**
(45) Date of publication and mention of the grant of the patent: **02.02.2022**
(21) Application number: 19213979.8
(22) Date of filing: 05.12.2019
(51) Int. Cl.: H04L 29/08, H04L 29/12, H04L 29/06

(54) **COMMUNICATION METHOD, DEVICE AND SYSTEM FOR CLEANING ROBOT AND MOBILE TERMINAL**
KOMMUNIKATIONSVERFAHREN, VORRICHTUNG UND SYSTEM FÜR EINEN REINIGUNGSROBOTER UND MOBILES ENDGERÄT
PROCÉDÉ DE COMMUNICATION, DISPOSITIF ET SYSTÈME DE ROBOT DE NETTOYAGE ET TERMINAL MOBILE

(30) Priority: 26.12.2018 CN 201811598712
(43) Date of publication of application: 01.07.2020
(73) Proprietor: Midea Robozone Technology Co., Ltd., Suzhou, Jiangsu Province (CN)
(72) Inventor: LI, Wei, Suzhou, Jiangsu 215100 (CN); ZHENG, Dianhao, Suzhou, Jiangsu 215100 (CN); LI, Ke, Suzhou, Jiangsu 215100 (CN)
(74) Representative: RGTH

(56) References cited:
- CN-A- 107 734 193
- US-A1- 2007 150 104

## Description

### TECHNICAL FIELD

The present disclosure relates to a field of communication technology, and particular to a communication method for a cleaning robot, a communication device for a cleaning robot, a mobile terminal, a cleaning robot, a communication system for a cleaning robot, an electronic device and a non-transitory computer readable storage medium.

### BACKGROUND

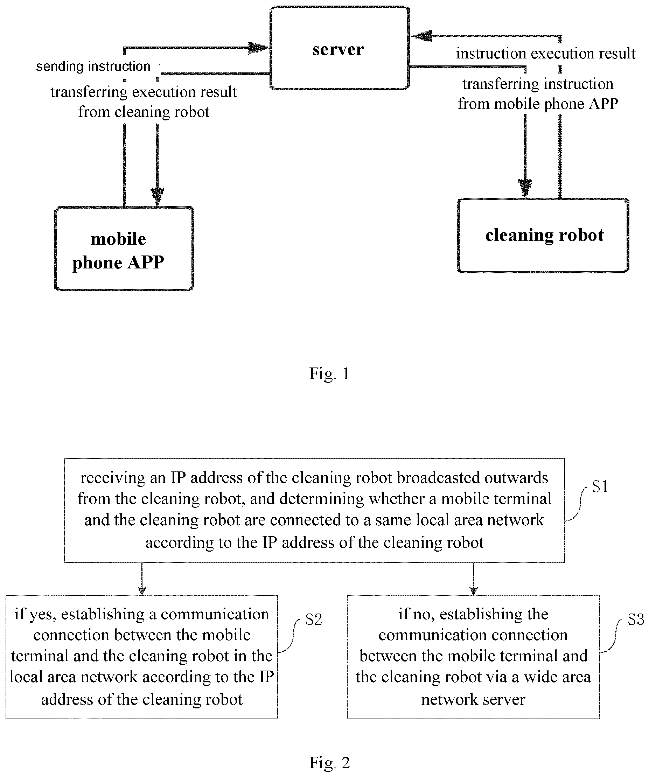

Currently, interaction between the cleaning robot and an application (APP) of a mobile phone is normally established by a WebSocket (a full-duplex communication protocol based on transmission control protocol (TCP)) persistent connection in the wide area network (WAN), that is, a WebSocket persistent connection is established between a server and the cleaning robot via the WAN, and a WebSocket persistent connection is established between the APP of the mobile phone and the server via the WAN. In this way, an instruction is sent from the APP of the mobile phone to the cleaning robot via a transit server, and the connection relationship thereof is shown in Fig. 1.

However, the server transfer of the instruction from the APP of the mobile phone to the cleaning robot may cause a delay, and delay time depends on the network bandwidth, the routing forwarding and the server response time, so that the instruction execution efficiency may decrease. If the delay is serious, it will negatively affect user experience.

Document CN 107734193 A discloses an intelligent equipment control method applied to intelligent equipment comprising the following steps: providing a mobile terminal configured to send a control instruction to the intelligent equipment; inputting the control instruction on the mobile terminal, and converting the control instruction into an audio signal; sending the audio signal to the intelligent equipment; enabling the intelligent equipment to receive the audio signal; converting the audio signal to reduce as the control instruction, and reading the control instruction; and executing the corresponding action according to the control instruction.

Document US 2007150104 A1 discloses an apparatus and method of controlling a network-based robot wherein the apparatus includes a first connection unit connecting to at least one application component server or content server through a network, a second connection unit connecting to a wireless internet sharing router to communicate with the robot, and a middleware receiving and storing an application component from the application component server, executing the application component to generate an operational command for the robot, sending the generated operational command to the robot, and processing information which is sent by the robot.

### SUMMARY

The present disclosure seeks to solve at least one of the problems that exist in the related art to at least some extent.

The invention is defined by a communication method for a communication system for a cleaning robot according to claim 1, a communication device for a communication system for a cleaning robot according to claim 5, a communication system for a cleaning robot according to claim 9, and a non-transitory computer readable storage medium according to claim 11. Further embodiments are defined by the dependent claims.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and/or other aspects and advantages of embodiments of the present disclosure will become apparent and more readily appreciated from the following descriptions made with reference to the drawings, in which:
Fig. 1 is a schematic diagram of communication between a mobile phone APP and a cleaning robot in the related art;
Fig. 2 is a flow chart of a communication method for a communication system for a cleaning robot according to an embodiment of the present disclosure;
Fig. 3 is a flow chart of a communication method for a communication system for a cleaning robot according to another embodiment of the present disclosure;
Fig. 4 is a flow chart of a communication method for a communication system for a cleaning robot according to still another embodiment of the present disclosure;
Fig. 5 is a block diagram of a communication device for a communication system for a cleaning robot according to an embodiment of the present disclosure; and
Fig. 6 is a block diagram of a communication device for a cleaning robot according to another embodiment of the present disclosure.

### DETAILED DESCRIPTION

Exemplary embodiments will be described in detail herein, and examples thereof are illustrated in accompanying drawings. Throughout figures referred by the following description, the same reference number in different figures indicates the same or similar elements. The embodiments described herein with reference to drawings are explanatory, and used to generally describe the present disclosure, which shall not be construed to limit the present disclosure.

A communication method for a communication system for a cleaning robot, a communication device for a communication system for a cleaning robot, a mobile terminal, a cleaning robot, a communication system for a cleaning robot, an electronic device and a non-transitory computer readable storage medium according to embodiments of the present disclosure are described below with reference to the drawings.

Fig. 2 is a flow chart of a communication method for a communication system for a cleaning robot according to an embodiment of the present disclosure.

As shown in Fig. 2, the communication method for a communication system for a cleaning robot includes following steps.

In S1, an IP address of the cleaning robot broadcasted outwards from the cleaning robot is received, and it is determined whether a mobile terminal and the cleaning robot are connected to a same local area network according to the IP address of the cleaning robot.

In an embodiment of the present disclosure, a step of receiving the IP address of the cleaning robot broadcasted outwards from the cleaning robot includes receiving the IP address of the cleaning robot broadcasted outwards from the cleaning robot with a user datagram protocol (UDP).

Specifically, after the cleaning robot is powered on, a built-in Wireless Fidelity (WiFi) module can automatically search for a nearby WiFi signal, i.e., a LAN signal. Moreover, when the cleaning robot is powered on (used) for the first time, it can be connected to the network, for example, access to a home area network (i.e., a home WiFi) under control of a cleaning robot APP of the mobile terminal.

When the cleaning robot accesses the home local area network (target network), the built-in WiFi module of the cleaning robot can utilize a port (for example, port 2088) in the home local area network to broadcast the IP address of the cleaning robot with the UDP.

The cleaning robot APP installed in the mobile terminal can automatically search for a nearby broadcasting signal after being activated. When the IP address of the cleaning robot broadcasted from the cleaning robot with the UDP is received, it is determined whether the mobile terminal and the cleaning robot are connected to the same local area network according to the IP address of the cleaning robot.

It should be noted that the WiFi signal described in this embodiment can be sent by a router.

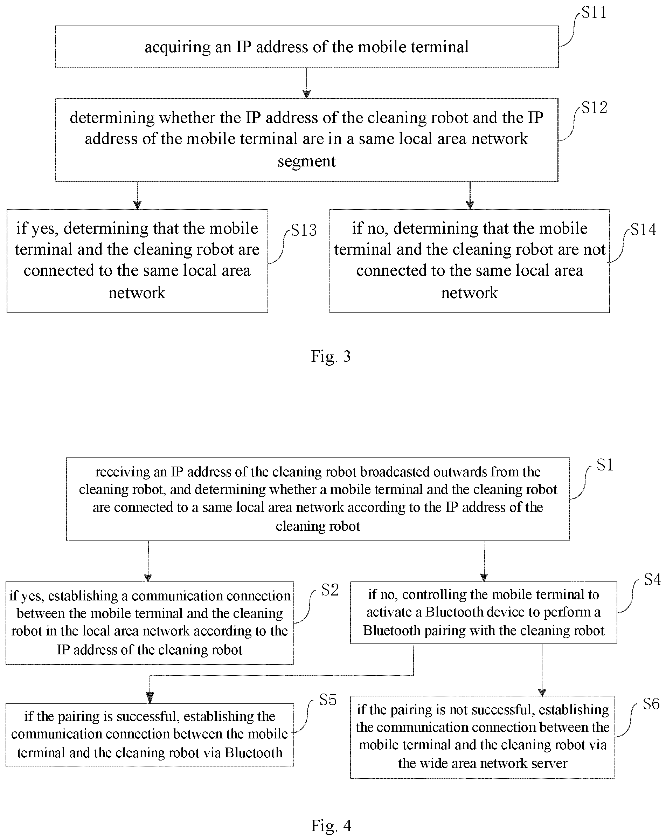

In an embodiment of the present disclosure, as shown in Fig. 3, a step of determining whether the mobile terminal and the cleaning robot are connected to the same local area network according to the IP address of the cleaning robot may include the following steps.

In S11, an IP address of the mobile terminal is acquired.

Specifically, when the cleaning robot APP as described above receives the IP address of the cleaning robot broadcasted by the cleaning robot, an IP address of the mobile terminal can be acquired by using an application programming interface (API) provided by the mobile terminal.

In S12, it is determined whether the IP address of the cleaning robot and the IP address of the mobile terminal are in a same local area network segment.

In S13, if yes, it is determined that the mobile terminal and the cleaning robot are connected to the same local area network.

In S14, if no, it is determined that the mobile terminal and the cleaning robot are not connected to the same local area network.

Specifically, after the cleaning robot APP as described above acquires the IP address of the mobile terminal, the IP address of the cleaning robot can be compared with the IP address of the mobile terminal to determine whether the two IP addresses are in the same LAN segment, and if yes, it is determined that the mobile terminal and the cleaning robot are connected to the same local area network (the target network); if no, it is determined that the mobile terminal and the cleaning robot are not connected to the same local area network. It should be noted that each network segment of the LAN is different to others.

In S2, if yes, a communication connection between the mobile terminal and the cleaning robot is established in the local area network according to the IP address of the cleaning robot.

In S3, if no, the communication connection between the mobile terminal and the cleaning robot is established via a wide area network server.

Specifically, when the cleaning robot APP determines that the mobile terminal and the cleaning robot are connected to the same local area network (the target network), the communication connection between the mobile terminal and the cleaning robot may be established in the local area network according to the IP address of the cleaning robot, i.e., a socket connection is established. When the cleaning robot APP determines that the mobile terminal and the cleaning robot are not connected to the same local area network (the target network), the communication connection between the mobile terminal and the cleaning robot may be established via the wide area network server, that is the mobile terminal is controlled to establish a communication connection to a server of the cleaning robot so as to communicate with the cleaning robot through the server of the cleaning robot. Therefore, the local area network may be a priority to be used when establishing the communication between the mobile terminal and the cleaning robot. If the local area network is not available, the technology of the wide area network communication may be used. In this way, the efficiency for the cleaning robot to execute an instruction from the mobile terminal may be greatly improved and thus the user experience may be improved.

In an alternative embodiment of the present disclosure, as shown in Fig. 4, the communication method for a communication system for a cleaning robot as described above may further include the following steps.

In S4, if no, the mobile terminal is controlled to activate a Bluetooth device to perform a Bluetooth pairing with the cleaning robot.

In S5, if the pairing is successful, the communication connection between the mobile terminal and the cleaning robot is established via Bluetooth.

In S6, if the pairing is not successful, the communication connection between the mobile terminal and the cleaning robot is established via the wide area network server.

Specifically, when the cleaning robot APP determines that the mobile terminal and the cleaning robot are not connected to the same local area network (the target network), the mobile terminal is controlled to activate the Bluetooth device. After the Bluetooth device is activated, the mobile terminal searches a Bluetooth signal of a preset range via the Bluetooth device. If a Bluetooth signal of the cleaning robot is found, the mobile terminal performs the Bluetooth pairing with the cleaning robot. If the pairing is successful, the cleaning robot APP may establish the communication connection between the mobile terminal and the cleaning robot via Bluetooth. If the pairing is not successful, the cleaning robot APP may establish the communication connection between the mobile terminal and the cleaning robot via the wide area network server. Therefore, the efficiency for the cleaning robot to execute an instruction from the mobile terminal may be greatly improved and thus the user experience may be improved.

In other embodiments of the present disclosure, when it is determined that the mobile terminal and the cleaning robot are not connected to the same local area network, the mobile terminal may establish the communication connection between the mobile terminal and the cleaning robot by other means, for example, an infrared communication and a near field communication (NFC).

In conclusion, with the communication method for a cleaning robot according to the embodiments of the present disclosure, the IP address of the cleaning robot broadcasted outwards from the cleaning robot is received first, and it is determined whether the mobile terminal and the cleaning robot are connected to the same local area network according to the IP address of the cleaning robot, if yes, the communication connection between the mobile terminal and the cleaning robot is established in the local area network according to the IP address of the cleaning robot; if no, the communication connection between the mobile terminal and the cleaning robot is established via the wide area network server. Therefore, the communication connection between the mobile terminal and the cleaning robot can be established in the local area network preferentially, which may greatly improve the efficiency for the cleaning robot to execute an instruction from the mobile terminal and thus improves the user experience.

In order to achieve the above objects, the present disclosure provides in an embodiment another communication method for a cleaning robot, the cleaning robot is connected to a local area network, and the communication method includes: broadcasting an IP address of the cleaning robot outwards to enable the mobile terminal to establish a communication connection with the cleaning robot in the local area network according to the IP address of the cleaning robot.

It should be noted that details not disclosed in the communication method for a cleaning robot in the embodiment of the present disclosure may refer to the details disclosed in the communication method of a cleaning robot in the embodiments as shown in Figs. 2 to 4, and thus are not described herein again.

In conclusion, with the communication method for a cleaning robot according to the embodiment of the present disclosure, when the cleaning robot is connected to the local area network, the IP address of the cleaning robot is broadcasted outwards to enable the mobile terminal to establish the communication connection with the cleaning robot in the local area network according to the IP address of the cleaning robot. Therefore, by establishing the communication connection between the mobile terminal and the cleaning robot in the local area network, the efficiency for the cleaning robot to execute an instruction from the mobile terminal may be greatly improved and thus the user experience may be improved.

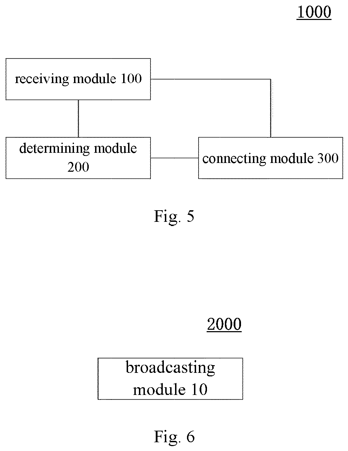

Fig. 5 is a block diagram of a communication device for a communication system for a cleaning robot according to an embodiment of the present disclosure.

As shown in Fig. 5, the communication device 1000 for a cleaning robot according to the embodiment of the present disclosure includes a receiving module 100, a determining module 200 and a connecting module 300.

Specifically, the receiving module 100 is configured to receive an IP address of the cleaning robot broadcasted outwards from the cleaning robot.

The determining module 200 is configured to determine whether a mobile terminal and the cleaning robot are connected to a same local area network according to the IP address of the cleaning robot.

The connecting module 300 is configured to establish a communication connection between the mobile terminal and the cleaning robot in the local area network according to the IP address of the cleaning robot if it is determined by the determining module 200 that the mobile terminal and the cleaning robot are connected to the same local area network.

The connecting module 300 is further configured to establish the communication connection between the mobile terminal and the cleaning robot via a wide area network server if it is determined by the determining module 200 that the mobile terminal and the cleaning robot are not connected to the same local area network.

In an embodiment of the present disclosure, the receiving module 100 is specifically configured to receive the IP address of the cleaning robot broadcasted outwards from the cleaning robot with a user datagram protocol (UDP).

In an embodiment of the present disclosure, the determining module 200 is specifically configured to: acquire an IP address of the mobile terminal, determine whether the IP address of the cleaning robot and the IP address of the mobile terminal are in a same local area network segment, if yes, determine that the mobile terminal and the cleaning robot are connected to the same local area network, if no, determine that the mobile terminal and the cleaning robot are not connected to the same local area network.

In an embodiment of the present disclosure, the connecting module 300 is specifically configured to: control the mobile terminal to activate a Bluetooth device to perform a Bluetooth pairing with the cleaning robot if it is determined by the determining module that the mobile terminal and the cleaning robot are not connected to the same local area network, establish the communication connection between the mobile terminal and the cleaning robot via Bluetooth if the pairing is successful, establish the communication connection between the mobile terminal and the cleaning robot via the wide area network server if the pairing is not successful.

It should be noted that details not disclosed in the communication device for a cleaning robot in the embodiment of the present disclosure may refer to the details disclosed in the communication method of a cleaning robot in the embodiments as shown in Figs. 2 to 4, and thus are not described herein again.

In conclusion, with the communication device for a cleaning robot according to the embodiments of the present disclosure, the IP address of the cleaning robot broadcasted outwards from the cleaning robot is received by the receiving module, and the determining module determines whether the mobile terminal and the cleaning robot are connected to the same local area network according to the IP address of the cleaning robot. When it is determined by the determining module that the mobile terminal and the cleaning robot are connected to the same local area network, the connecting module establishes the communication connection between the mobile terminal and the cleaning robot in the local area network according to the IP address of the cleaning robot. When it is determined by the determining module that the mobile terminal and the cleaning robot are not connected to the same local area network, the connecting module establishes the communication connection between the mobile terminal and the cleaning robot via the wide area network server. Therefore, the communication connection between the mobile terminal and the cleaning robot can be established in the local area network preferentially, which may greatly improve the efficiency for the cleaning robot to execute an instruction from the mobile terminal and thus improves the user experience.

Fig. 6 is a block diagram of a communication device for a cleaning robot according to another embodiment of the present disclosure.

As shown in Fig. 6, the communication device 2000 for a cleaning robot according to the embodiment of the present disclosure includes a broadcasting module 10.

Specifically, the broadcasting module 10 is configured to broadcast an IP address of the cleaning robot outwards when the cleaning robot is connected to a local area network to enable the mobile terminal to establish a communication connection with the cleaning robot in the local area network according to the IP address of the cleaning robot.

It should be noted that details not disclosed in the communication device for a cleaning robot in the embodiment of the present disclosure may refer to the details disclosed in the communication method of a cleaning robot in the embodiments as shown in Figs. 2 to 4, and thus are not described herein again.

In conclusion, with the communication device for a cleaning robot according to the embodiments of the present disclosure, when the cleaning robot is connected to the local area network, the broadcasting module broadcasts the IP address of the cleaning robot outwards to enable the mobile terminal to establish the communication connection with the cleaning robot in the local area network according to the IP address of the cleaning robot. Therefore, by establishing the communication connection between the mobile terminal and the cleaning robot in the local area network, the efficiency for the cleaning robot to execute an instruction from the mobile terminal may be greatly improved and thus the user experience may be improved.

In order to realize the above embodiments, the present disclosure further provides a mobile terminal, including a communication device for a cleaning robot as described in the embodiment as shown in Fig. 4.

With the mobile terminal according to the embodiments of the present disclosure, by using the communication device for a cleaning robot as described in the embodiments as shown in Fig. 4, the communication connection between the mobile terminal and the cleaning robot can be established in the local area network preferentially, which may greatly improve the efficiency for the cleaning robot to execute an instruction from the mobile terminal and thus improves the user experience.

In order to realize the above embodiments, the present disclosure further provides a cleaning robot, including a communication device for a cleaning robot as described in the embodiments as shown in Fig. 5.

With the cleaning robot according to the embodiments of the present disclosure, by using the communication device for a cleaning robot as described in the embodiments as shown in Fig. 5, the communication connection between the mobile terminal and the cleaning robot can be established in the local area network, which may greatly improve the efficiency for the cleaning robot to execute an instruction from the mobile terminal and thus improves the user experience.

In order to realize the above embodiments, the present disclosure further provides a communication system for a cleaning robot, including a mobile terminal and a cleaning robot.

With the communication system according to the embodiments of the present disclosure, by using the mobile terminal as described in the embodiments of the fifth aspect of the present disclosure and the cleaning robot as described in the embodiments of the sixth aspect of the present disclosure, the communication connection between the mobile terminal and the cleaning robot can be established in the local area network preferentially, which may greatly improve the efficiency for the cleaning robot to execute an instruction from the mobile terminal and thus improves the user experience.

In order to realize the above embodiments, the present disclosure further provides an electronic device, including: a processor, and a memory having stored therein computer programs that, when executed by the processor, causes the processor to perform a communication method for a cleaning robot as described in the above embodiments of the present disclosure.

With the electronic device according to the embodiments of the present disclosure, the processor executes the computer programs stored in the memory, such that the communication connection between the mobile terminal and the cleaning robot can be established in the local area network, which may greatly improve the efficiency for the cleaning robot to execute an instruction from the mobile terminal and thus improves the user experience.

In order to realize the above embodiments, the present disclosure further provides a non-transitory computer readable storage medium having stored therein a computer program that, when executed by a processor, causes the processor to perform a communication method for a cleaning robot as described in the above embodiments of the present disclosure.

With the non-transitory computer readable storage medium according to the embodiments of the present disclosure, by executing the computer program stored therein, the communication connection between the mobile terminal and the cleaning robot can be established in the local area network, which may greatly improve the efficiency for the cleaning robot to execute an instruction from the mobile terminal and thus improves the user experience.

In the specification, it is to be understood that terms such as "central", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial" and "circumferential" should be construed to refer to the orientation as then described or as shown in the drawings under discussion. These relative terms are for convenience of description and do not require that the present disclosure be constructed or operated in a particular orientation, and thus shall not be construed to limit the present disclosure.

In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present disclosure, unless specified otherwise, "a plurality of" means two or more than two.

In the present disclosure, unless specified or limited otherwise, the terms "mounted", "connected", "coupled", "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the description, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on", "above" or "on top of" a second feature may include an embodiment in which the first feature is right or obliquely "on", "above" or "on top of" the second feature, or just means that the first feature is at a height higher than that of the second feature; while a first feature "below", "under" or "on bottom of" a second feature may include an embodiment in which the first feature is right or obliquely "below", "under" or "on bottom of" the second feature, or just means that the first feature is at a height lower than that of the second feature.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. Thus, the appearances of above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples described in the specification, as well as features of embodiments or examples, without conflicting, may be combined by one skilled in the art.

## Claims

1. A communication method for a communication system for a cleaning robot, comprising:
receiving (S1) an IP address of the cleaning robot broadcasted outwards from the cleaning robot, and determining whether a mobile terminal and the cleaning robot are connected to the same local area network according to the IP address of the cleaning robot,
if yes, establishing (S2) a communication connection between the mobile terminal and the cleaning robot in the local area network according to the IP address of the cleaning robot,
if no, controlling (S4) the mobile terminal to activate a Bluetooth device to perform a Bluetooth pairing with the cleaning robot,
if the pairing is successful, establishing (S5) the communication connection between the mobile terminal and the cleaning robot via Bluetooth,
if the pairing is not successful, establishing (S6) the communication connection between the mobile terminal and the cleaning robot via the wide area network server.

2. The communication method according to claim 1, wherein receiving (S1) the IP address of the cleaning robot broadcasted outwards from the cleaning robot comprises:
receiving the IP address of the cleaning robot broadcasted outwards from the cleaning robot with a user datagram protocol, UDP.

3. The communication method according to claim 1 or 2, wherein determining (S1) whether the mobile terminal and the cleaning robot are connected to the same local area network according to the IP address of the cleaning robot comprises:
acquiring (S11) an IP address of the mobile terminal,
determining (S12) whether the IP address of the cleaning robot and the IP address of the mobile terminal are in a same local area network segment,
if yes, determining (S13) that the mobile terminal and the cleaning robot are connected to the same local area network,
if no, determining (S14) that the mobile terminal and the cleaning robot are not connected to the same local area network.

4. The communication method according to any one of claims 1 to 3, comprising:
in response to a determination that the cleaning robot being connected to a local area network, broadcasting an IP address of the cleaning robot outwards to enable a mobile terminal to establish a communication connection with the cleaning robot in the local area network according to the IP address of the cleaning robot.

5. A communication device (1000) for a communication system for a cleaning robot, comprising:
a receiving module (100), configured to receive an IP address of the cleaning robot broadcasted outwards from the cleaning robot,
a determining module (200), configured to determine whether a mobile terminal and the cleaning robot are connected to the same local area network according to the IP address of the cleaning robot,
a connecting module (300),
configured to establish a communication connection between the mobile terminal and the cleaning robot in the local area network according to the IP address of the cleaning robot if it is determined by the determining module (200) that the mobile terminal and the cleaning robot are connected to the same local area network, if it is determined by the determining module (200) that the mobile terminal and the cleaning robot are not connected to the same local area network,
the connecting module (300) is further configured to:
control the mobile terminal to activate a Bluetooth device to perform a Bluetooth pairing with the cleaning robot,
establish the communication connection between the mobile terminal and the cleaning robot via Bluetooth if the Bluetooth pairing is successful, and
establish the communication connection between the mobile terminal and the cleaning robot via the wide area network server if the Bluetooth pairing is not successful.

6. The communication device (1000) according to claim 5, wherein the receiving module (100) is specifically configured to:
receive the IP address of the cleaning robot broadcasted outwards from the cleaning robot with a user datagram protocol, UDP.

7. The communication device (1000) according to claim 5 or 6, wherein the determining module is specifically configured to:
acquire an IP address of the mobile terminal,
determine whether the IP address of the cleaning robot and the IP address of the mobile terminal are in a same local area network segment,
if yes, determine that the mobile terminal and the cleaning robot are connected to the same local area network,
if no, determine that the mobile terminal and the cleaning robot are not connected to the same local area network.

8. A mobile terminal, comprising a communication device (1000) for a communication system for a cleaning robot according to any one of claims 5 to 7.

9. A communication system for a cleaning robot, comprising a mobile terminal according to claim 8 and a cleaning robot comprising a communication device (2000) for a cleaning robot, the communication device (2000) further comprising a broadcasting module (10), configured to broadcast an IP address of the cleaning robot outwards when the cleaning robot is connected to a local area network to enable a mobile terminal to establish a communication connection with the cleaning robot in the local area network according to the IP address of the cleaning robot.

10. A non-transitory computer readable storage medium having stored therein a computer program that, when executed by a processor, causes the processor to perform a communication method for a communication system for a cleaning robot according to any one of claims 1 to 4.

## Patentansprüche

1. Kommunikationsverfahren für ein Kommunikationssystem für einen Reinigungsroboter, umfassend:
Empfangen (S1) einer IP-Adresse des Reinigungsroboters, die von dem Reinigungsroboter ausgesandt wird, und Bestimmen, ob ein mobiles Endgerät und der Reinigungsroboter mit demselben lokalen Netzwerk gemäß der IP-Adresse des Reinigungsroboters verbunden sind,
falls ja, Herstellen (S2) einer Kommunikationsverbindung zwischen dem mobilen Endgerät und dem Reinigungsroboter im lokalen Netzwerk gemäß der IP-Adresse des Reinigungsroboters,
falls nein, Steuern (S4) des mobilen Endgeräts, um ein Bluetooth-Gerät zu aktivieren, um eine Bluetooth-Kopplung mit dem Reinigungsroboter durchzuführen,
wenn die Kopplung erfolgreich ist, Herstellen (S5) der Kommunikationsverbindung zwischen dem mobilen Endgerät und dem Reinigungsroboter über Bluetooth,
wenn die Kopplung nicht erfolgreich ist, Herstellen (S6) der Kommunikationsverbindung zwischen dem mobilen Endgerät und dem Reinigungsroboter über den WAN-(Wide Area Network)Server.

2. Kommunikationsverfahren gemäß Anspruch 1, wobei das Empfangen (S1) der vom Reinigungsroboter ausgesandten IP-Adresse des Reinigungsroboters Folgendes umfasst:
Empfangen der vom Reinigungsroboter ausgesandten IP-Adresse des Reinigungsroboters mit einem User Datagram Protocol (UDP).

3. Kommunikationsverfahren gemäß Anspruch 1 oder 2, wobei das Bestimmen (S1), ob das mobile Endgerät und der Reinigungsroboter gemäß der IP-Adresse des Reinigungsroboters mit demselben lokalen Netzwerk verbunden sind, das Folgende umfasst:
Erlangen (S11) einer IP-Adresse des mobilen Endgeräts,
Bestimmen (S12), ob sich die IP-Adresse des Reinigungsroboters und die IP-Adresse des mobilen Endgeräts in demselben lokalen Netzwerksegment befinden,
wenn ja, Bestimmen (S13), dass das mobile Endgerät und der Reinigungsroboter mit demselben lokalen Netzwerk verbunden sind,
falls nein, Bestimmen (S14), dass das mobile Endgerät und der Reinigungsroboter nicht mit demselben lokalen Netzwerk verbunden sind.

4. Kommunikationsverfahren gemäß einem der Ansprüche 1 bis 3, umfassend:
als Reaktion auf eine Bestimmung, dass der Reinigungsroboter mit einem lokalen Netzwerk verbunden ist, Aussenden einer IP-Adresse des Reinigungsroboters, um einem mobilen Endgerät zu ermöglichen, eine Kommunikationsverbindung mit dem Reinigungsroboter im lokalen Netzwerk entsprechend der IP-Adresse des Reinigungsroboters aufzubauen.

5. Kommunikationsvorrichtung (1000) für ein Kommunikationssystem für einen Reinigungsroboter, umfassend:
ein Empfangsmodul (100), das dazu konfiguriert ist, eine IP-Adresse des Reinigungsroboters zu empfangen, die von dem Reinigungsroboter ausgesandt wird,
ein Bestimmungsmodul (200), das dazu konfiguriert ist, zu bestimmen, ob ein mobiles Endgerät und der Reinigungsroboter gemäß der IP-Adresse des Reinigungsroboters mit demselben lokalen Netzwerk verbunden sind,
ein Verbindungsmodul (300),
das dazu konfiguriert ist, um eine Kommunikationsverbindung zwischen dem mobilen Endgerät und dem Reinigungsroboter in dem lokalen Netzwerk gemäß der IP-Adresse des Reinigungsroboters aufzubauen, wenn durch das Bestimmungsmodul (200) bestimmt wird, dass das mobile Endgerät und der Reinigungsroboter mit demselben lokalen Netzwerk verbunden sind,
wenn durch das Bestimmungsmodul (200) bestimmt wird, dass das mobile Endgerät und der Reinigungsroboter nicht mit demselben lokalen Netzwerk verbunden sind,
ist das Verbindungsmodul (300) ferner so konfiguriert, dass es:
das mobile Endgerät zu steuern, dass es ein Bluetooth-Gerät aktiviert, um eine Bluetooth-Kopplung mit dem Reinigungsroboter durchzuführen,
die Kommunikationsverbindung zwischen mobilem Endgerät und Reinigungsroboter über Bluetooth herzustellen, wenn die Bluetooth-Kopplung erfolgreich ist, und
die Kommunikationsverbindung zwischen dem mobilen Endgerät und dem Reinigungsroboter über den WAN-(Wide Area Network)Server herzustellen, wenn die Bluetooth-Kopplung nicht erfolgreich ist.

6. Kommunikationsvorrichtung (1000) gemäß Anspruch 5, wobei das Empfangsmodul (100) speziell dazu konfiguriert ist, um:
die IP-Adresse des Reinigungsroboters zu empfangen, die von dem Reinigungsroboter mit einem User Datagram Protocol UDP nach außen gesendet wird.

7. Kommunikationsvorrichtung (1000) gemäß Anspruch 5 oder 6, wobei das Bestimmungsmodul speziell dazu konfiguriert ist, um:
eine IP-Adresse des mobilen Endgeräts zu erlangen,
festzustellen, ob sich die IP-Adresse des Reinigungsroboters und die IP-Adresse des mobilen Endgeräts im selben lokalen Netzwerksegment befinden,
wenn ja, festzustellen, dass das mobile Endgerät und der Reinigungsroboter mit demselben lokalen Netzwerk verbunden sind,
wenn nein, festzustellen, dass das mobile Endgerät und der Reinigungsroboter nicht mit demselben lokalen Netzwerk verbunden sind.

8. Mobiles Endgerät, umfassend eine Kommunikationsvorrichtung (1000) für ein Kommunikationssystem für einen Reinigungsroboter gemäß einem der Ansprüche 5 bis 7.

9. Kommunikationssystem für einen Reinigungsroboter, umfassend ein mobiles Endgerät gemäß Anspruch 8 und einen Reinigungsroboter umfassend eine Kommunikationsvorrichtung (2000) für einen Reinigungsroboter, wobei die Kommunikationsvorrichtung (2000) ferner ein Sendemodul (10) umfasst, das dazu konfiguriert ist, eine IP-Adresse des Reinigungsroboters auszusenden, wenn der Reinigungsroboter mit einem lokalen Netzwerk verbunden ist, um es einem mobilen Endgerät zu ermöglichen, eine Kommunikationsverbindung mit dem Reinigungsroboter in dem lokalen Netzwerk gemäß der IP-Adresse des Reinigungsroboters aufzubauen.

10. Nichtflüchtiges computerlesbares Speichermedium, aufweisend ein darin gespeichertes Computerprogramm, das, wenn es von einem Prozessor ausgeführt wird, den Prozessor veranlasst, ein Kommunikationsverfahren für ein Kommunikationssystem für einen Reinigungsroboter nach einem der Ansprüche 1 bis 4 durchzuführen.

## Revendications

1. Procédé de communication pour un système de communication pour un robot de nettoyage, comprenant :
la réception (S1) d'une adresse IP du robot de nettoyage diffusée vers l'extérieur à partir du robot de nettoyage, et la détermination si un terminal mobile et le robot de nettoyage sont connectés au même réseau local en fonction de l'adresse IP du robot de nettoyage,
si oui, l'établissement (S2) d'une connexion de communication entre le terminal mobile et le robot de nettoyage dans le réseau local en fonction de l'adresse IP du robot de nettoyage,
si non, la commande (S4) du terminal mobile pour activer un dispositif Bluetooth afin d'effectuer un jumelage Bluetooth avec le robot de nettoyage,
si le jumelage aboutit, l'établissement (S5) de la connexion de communication entre le terminal mobile et le robot de nettoyage via Bluetooth,
si le jumelage n'aboutit pas, l'établissement (S6) de la connexion de communication entre le terminal mobile et le robot de nettoyage via le serveur de réseau étendu.

2. Procédé de communication selon la revendication 1, dans lequel la réception (S1) de l'adresse IP du robot de nettoyage diffusée vers l'extérieur à partir du robot de nettoyage comprend :
la réception de l'adresse IP du robot de nettoyage diffusée vers l'extérieur à partirdu robot de nettoyage à l'aide d'un protocole de datagramme d'utilisateur, UDP.

3. Procédé de communication selon la revendication 1 ou 2, dans lequel la détermination (S1) si le terminal mobile et le robot de nettoyage sont connectés au même réseau local en fonction de l'adresse IP du robot de nettoyage comprend :
l'acquisition (S11) d'une adresse IP du terminal mobile,
la détermination (S12) si l'adresse IP du robot de nettoyage et l'adresse IP du terminal mobile se trouvent dans le même segment de réseau local,
si oui, la détermination (S13) que le terminal mobile et le robot de nettoyage sont connectés au même réseau local,
si non, la détermination (S14) que le terminal mobile et le robot de nettoyage ne sont pas connectés au même réseau local.

4. Procédé de communication selon l'une quelconque des revendications 1 à 3, comprenant :
en réponse à une détermination que le robot de nettoyage est connecté à un réseau local, la diffusion d'une adresse IP du robot de nettoyage vers l'extérieur pour permettre à un terminal mobile d'établir une connexion de communication avec le robot de nettoyage dans le réseau local en fonction de l'adresse IP du robot de nettoyage.

5. Dispositif de communication (1000) pour un système de communication pour un robot de nettoyage, comprenant :
un module de réception (100) configuré pour recevoir une adresse IP du robot de nettoyage diffusée vers l'extérieur à partir du robot de nettoyage,
un module de détermination (200) configuré pour déterminer si un terminal mobile et le robot de nettoyage sont connectés au même réseau local en fonction de l'adresse IP du robot de nettoyage,
un module de connexion (300) configuré pour établir une connexion de communication entre le terminal mobile et le robot de nettoyage dans le réseau local en fonction de l'adresse IP du robot de nettoyage s'il est déterminé par le module de détermination (200) que le terminal mobile et le robot de nettoyage sont connectés au même réseau local,
s'il est déterminé par le module de détermination (200) que le terminal mobile et le robot de nettoyage ne sont pas connectés au même réseau local,
le module de connexion (300) est en outre configuré pour :
commander le terminal mobile pour activer un dispositif Bluetooth afin d'effectuer un jumelage Bluetooth avec le robot de nettoyage,
établir la connexion de communication entre le terminal mobile et le robot de nettoyage via Bluetooth si le jumelage Bluetooth aboutit, et
établir la connexion de communication entre le terminal mobile et le robot de nettoyage via le serveur de réseau étendu si le jumelage Bluetooth n'aboutit pas.

6. Dispositif de communication (1000) selon la revendication 5, dans lequel le module de réception (100) est spécifiquement configuré pour :
recevoir l'adresse IP du robot de nettoyage diffusée vers l'extérieur à partir du robot de nettoyage à l'aide d'un protocole de datagramme d'utilisateur, UDP.

7. Dispositif de communication (1000) selon la revendication 5 ou 6, dans lequel le module de détermination est spécifiquement configuré pour :
acquérir une adresse IP du terminal mobile,
déterminer si l'adresse IP du robot de nettoyage et l'adresse IP du terminal mobile se trouvent dans un même segment de réseau local,
si oui, déterminer que le terminal mobile et le robot de nettoyage sont connectés au même réseau local,
si non, déterminer que le terminal mobile et le robot de nettoyage ne sont pas connectés au même réseau local.

8. Terminal mobile comprenant un dispositif de communication (1000) pour un système de communication pour un robot de nettoyage selon l'une quelconque des revendications 5 à 7.

9. Système de communication pour un robot de nettoyage, comprenant un terminal mobile selon la revendication 8 et un robot de nettoyage comprenant un dispositif de communication (2000) pour un robot de nettoyage, le dispositif de communication (2000) comprenant en outre un module de diffusion (10) configuré pour diffuser une adresse IP du robot de nettoyage vers l'extérieur lorsque le robot de nettoyage est connecté à un réseau local pour permettre à un terminal mobile d'établir une connexion de communication avec le robot de nettoyage dans le réseau local en fonction de l'adresse IP du robot de nettoyage.

10. Support de stockage non transitoire lisible par ordinateur, sur lequel est stocké un programme informatique amenant un processeur à mettre en œuvre un procédé de communication pour un système de communication pour un robot de nettoyage selon l'une quelconque des revendications 1 à 4, lorsque celui-ci est exécuté par le processeur.
